# EUROPÄISCHE PATENTSCHRIFT

(11) **EP 0 529 236 B1**
(45) Veröffentlichungstag und Bekanntmachung des Hinweises auf die Patenterteilung: **08.06.1994**
(21) Anmeldenummer: 92111083.9
(22) Anmeldetag: 30.06.1992
(51) Int. Cl.: F16D 65/12

(54) **Achsbremsscheibe für Schienenfahrzeuge**
Axle-brake disc for railway-vehicles
Poulie de frein à axe pour voitures sur rails

(30) Priorität: 02.08.1991 DE 4125701
(43) Veröffentlichungstag der Anmeldung: 03.03.1993
(73) Patentinhaber: KNORR-BREMSE AG, 80710 München (DE)
(72) Erfinder: Wirth, Xaver, Dr., W-8045 Ismaning (DE)

(56) Entgegenhaltungen:
- EP-A- 0 170 298
- AT-B- 364 971
- DE-A- 3 320 543
- DE-A- 3 814 614
- US-A- 4 077 501
- US-A- 4 745 996

## Beschreibung

Die Erfindung betrifft eine Achsbremsscheibe für Schienenfahrzeuge, insbesondere Hochgeschwindigkeitsgüterwagen, mit einem einstückigen Bremsring aus einem Eisenwerkstoff, der zwei axial zueinander versetzte, außenseitig Reibringflächen aufweisende Reibringabschnitte aufweist, welche durch Ventilationsabschnitte miteinander verbunden sind, welche bei Rotation des Bremsringes Kühlluft durch zwischen diesen verlaufende und axial durch die Reibringabschnitte begrenzte Kühlluftkanäle von radial innen nach radial außen fördern. Eine derartige Achsbremsscheibe ist aus AT-B- 364 971 bekannt.

Bei den bekannten Achsbremsscheiben sind die Ventilationsabschnitte als radial verlaufende, flache Ventilationsrippen oder axial verlaufende, bolzenartige Rundstege mit zylindrischem, ovalem oder sonstigem Querschnitt ausgebildet sind. Diese Ventilationsabschnitte begrenzen zusammen mit den Reibringabschnitten Kühlluftkanäle derart, daß bei Rotation des Bremsringes unabhängig von der Drehrichtung Kühlluft von radialinnenseitigen Eingangsöffnungen zu radialaußenseitigen Ausgangsöffnungen der Kühlluftkanäle gefördert wird. Die Reibringabschnitte können an ihrem Umfangsbereich mit als Markierung dienenden Eindrehungen versehen sein, welche die Verschleißbegrenzung anzeigen. Der Bremsring ist im allgemeinen durch eine geeignete Verbindung mit einem Nabenkörper verbunden, welcher auf die Achswelle eines Schienenfahrzeug-Radsatzes aufzupressen, aufzuschrumpfen oder in sonstiger Weise mit dieser zu verbinden ist; der Bremsring und der Nabenkörper können auch einstückig ausgeführt sein.

Bisher ist es üblich, bei Schienenfahrzeugen je nach der maximalen, möglichen Bremsbelastung eine bis vier Achsbremsscheiben nebeneinander auf einer Radsatzwelle anzuzordnen, wobei jede Achsbremsscheibe im Neuzustand eine Breite, gemessen axial von einer Reibringfläche zur anderen, von maximal 110 mm, zumeist jedoch ca. 70 mm aufweist. Wesentlich dabei ist, daß die Bremsscheiben sowohl die während mehrmals aufeinanderfolgenden Stoppbremsungen aus nahe der Höchstgeschwindigkeit des Fahrzeuges anfallende Wärmebelastung als auch die bei langen, gebremsten Talfahrten auftretende Wärmebelastung sicher aufnehmen können: Während im ersteren Falle mehrmals mit Abstand zueinander starke Wärmeanfälle auftreten, wobei die Wärme z.T. von den Achsbremsscheiben gespeichert und bis zum nächsten Wärmeanfall großenteils allmählich wieder abgegeben wird, tritt im zweiten Falle, bei langen Talfahrten, eine lang anhaltende Wärmezufuhr auf, welche durch den ebenfalls ständig wirksamen Kühlluftstrom derart abzuführen ist, daß sich an keiner Stelle der Bremse, insbesondere des Bremsringes bzw. der Beläge, eine unzulässig hohe Temperatur einstellt. In Anbetracht der vorstehend erläuterten Wärmebelastungen konnte es bisher genügen, Güterwagen mit einer zugelassenen Höchstgeschwindigkeit bis zu 120 km/h anstelle einer üblichen Klotzbremse mit zwei Achsbremsscheiben je Radsatz auszustatten. Aus Berechnungen und auch Erfahrungen mit diesen Güterwagen ergibt sich, daß die neuen Hochgeschwindigkeitsgüterwagen, welche für Güterzüge mit einer Fahrgeschwindigkeit bis zu 160 km/h vorgesehen sind, mit vier derartigen Achsbremsscheiben je Radsatz ausgestattet werden müssen, da andernfalls bei langen Talfahrten sich zu hohe Beharrungstemperaturen ergeben. Diese vier Achsbremsscheiben je Radsatz bedeuten insbesondere auch im Hinblick auf die hierfür erforderlichen anderen Bremsteile, wie die Anzahl der Bremsbeläge, deren Halterung und Zuspannmechanik, einen großen Bau-, Montage- und Überwachungsaufwand, zugleich stellen die vier Achsbremsscheiben eine große, ungefederte Masse mit entsprechender Belastung der Radsätze und des Schienenweges dar.

Es ist Aufgabe der Erfindung, eine Achsbremsscheibe der eingangs genannten Art derart auszugestalten, daß sie ein Vermindern des Aufwandes bei bremstechnisch hochbelasteten Schienenfahrzeugen, insbesonder bei Hochgeschwindigkeitsgüterwagen ermöglicht.

Diese Aufgabe wird nach der Erfindung dadurch gelöst, daß die axiale Breite des Bremsringes zwischen 140 und 200 mm beträgt.

Durch diese Ausgestaltung der Achsbremsscheibe ist es möglich, bei bremstechnisch hochbelasteten Schienenfahrzeugen, insbesondere bei den erwähnten Hochgeschwindigkeitsgüterwagen, weniger Achsbremsscheiben je Radsatz vorzusehen, als es bisher erforderlich war: Für die Hochgeschwindigkeitsgüterwagen genügt so beispielsweise eine Anordnung von drei Achsbremsscheiben je Radsatz, um bei langen, gebremsten Talfahrten das Erreichen von unzulässig hohen Temperaturen auszuschließen; zugleich genügen diese drei Achsbremsscheiben auch, um die Temperaturbelastung der Bremsteile bei den erwähnten Stoppbremsungen im zulässigen Temperaturbereich zu belassen. Dabei ergibt sich, daß die drei nach der Erfindung ausgebildeten Achsbremsscheiben je Radsatz eine wesentlich geringere Masse als die bisher für derartige Bremsbeanspruchungen erforderlichen, vier Achsbremsscheiben aufweisen, die ungefederte Masse des Hochgeschwindigkeitsgüterwagens also wesentlich geringer ist. Zugleich vermindert sich der Materialaufwand für die Achsbremsscheiben, die Beläge und deren Zuspannorgane, wodurch sich weitere Verbilligungen in der Anschaffung, Montage und Wartung ergeben. Zusätzlich wird ein geringerer Einbauraum für die Bremsorgane benötigt.

Nach der weiteren Erfindung vorteilhafte Ausgestaltungsmöglichkeiten für derartige Achsbremsscheiben sind den Merkmalen der Unteransprüche entnehmbar.

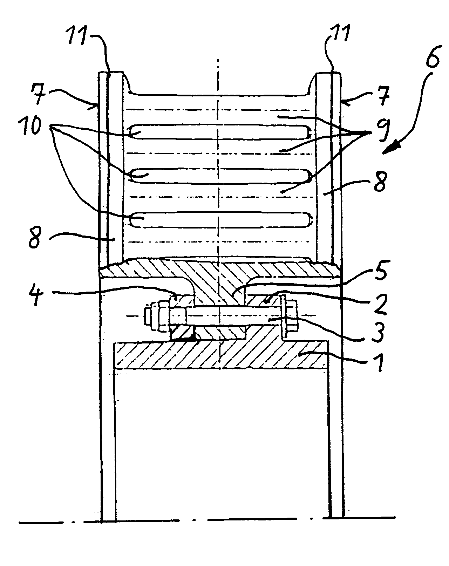

In der Zeichnung ist ein Ausführungsbeispiel für eine nach der Erfindung ausgebildete Achsbremsscheibe im Schnitt dargestellt.

Die Achsbremsscheibe weist einen auf einer nicht dargestellten Radsatzwelle durch Preßsitz, Schrumpfsitz oder in sonstiger Weise zu halternden Nabenteil 1 auf, der außenseitig einen Ringflansch 2 trägt, an welchen mittels achsparalleler Schrauben 3 und eines Klemmringes 4 ein nach radialinnen vorspringender Ringflansch 5 eines Bremsringes 6 gehaltert ist. Während das Nabenteil 1 vorzugsweise aus Stahlguß oder einem ähnlichen Werkstoff besteht, wird der einstückige Bremsring 6 vorzugsweise aus Grauguß ggf. mit Kugelgraphit oder einem ähnlichen Werkstoff, ggf. aber auch ebenfalls aus Stahlguß gefertigt.

Der einstückige Bremsring 6 besteht aus zwei axial zueinander versetzten, außenseitig Reibringflächen 7 aufweisenden Reibringabschnitten 8, welche durch Ventilationsabschnitte 9 miteinander verbunden sind. Zwischen den Ventilationsabschnitten 9 verlaufen Kühlluftkanäle 10, welche radialinnen und radialaußen, bezogen auf den Bremsring 6, in die Atmosphäre münden und welche in axialer Richtung durch die Reibringabschnitte 8 begrenzt sind. Im dargestellten Ausführungsbeispiel sind die Ventilationsabschnitte 9 als zumindest annähernd axial verlaufende Rundstege mit zylindrischem Querschnitt ausgebildet und können in einem bestimmten Muster angeordnet sein, wie es beispielsweise aus der EP-B-0 077 433 bekannt ist. Die Anordnung der bolzenartige Ventilationsabschnitte 9 kann jedoch auch in abweichender Form bzw. in einem abweichenden Muster erfolgen, die Ventilationsabschnitte können zudem einen anderen, beispielsweise ovalen oder sonstigen Querschnitt aufweisen, welcher zudem über den Radius des Bremsringes 6 sich ändern kann.

Die Ventilationsabschnitte 9 weisen eine axiale Länge auf, derart, daß bei einer Breite eines jeden der beiden Reibringabschnitte 8 von etwa 15 bis 30 mm, vorzugsweise im Neuzustand von ca. 22 mm, der axiale Abstand der beiden Reibringflächen 7, also die axiale Breite des Bremsringes 6, etwa zwischen 140 und 200 mm, vorzugsweise ca. 170 mm beträgt. Das Verhältnis der axialen Breite zur radialen Breite der Reibringabschnitte, d.h. der radialen Breite der Reibringfläche 7, beträgt etwa 1,0 bis 1,4. Bei diesen Bemessungen ergibt sich eine optimale Wärmeabfuhr bei vertretbarem Aufwand: Ein weiteres Vergrößern der axialen Breite des Bremsringes würde bei unverhältnismäßig großer Aufwandsteigerung eine nur unwesentlich verbesserte Wärmeabfuhr erbringen.

Am Umfangsbereich eines jeden der Reibringabschnitte 8 ist im Abstand von ca. 5 bis 7 mm von der Reibringfläche 7, bezogen auf den Neuzustand des Bremsringes 6, eine schmale Ringnut eingearbeitet, welche als Verschleißmaß für den Bremsring 6 dient: Bis zu dieser Ringnut 11 ist ein Verschleiß der Reibringabschnitte 8 unter der Einwirkung von an die Reibringflächen 7 anpressbaren, nicht dargestellten Bremsbelägen zulässig.

Der Durchmesser der Achsbremsscheibe richtet sich nach den Gegebenheiten des Radsatzes bzw. Schienenfahrzeuges, für welche er vorgesehen ist. Falls beispielsweise die Räder des Radsatzes einen Mindestdurchmesser von 860 mm aufweisen und ein UIC-Freiraum von 125 mm über der Schienenoberkante vorgeschrieben ist, so kann der Durchmesser der Achsbremsscheibe zweckmäßig zu 610 mm festgelegt werden. Die vorstehend angegebene Breite der Achsbremsscheibe von ca. 140 bis 200 mm, vorzugsweise ca. 170 mm, und auch das Verhältnis der axialen zur radialen Breite des Bremsringes 6 von 1,0 bis 1,4, sind von diesem Durchmesser jedoch nicht abhängig, auch im Durchmesser kleinere oder größere Achsbremsscheiben sind nach der Erfindung mit dieser Breite bzw. diesem Verhältnis zu gestalten.

Es hat sich geezeigt, daß während langen, gebremsten Talfahrten von Zügen mit diesen Hochgeschwindigkeitsgüterwagen eine Anordnung von drei erfindungsgemäßen Achsbremsscheiben je Radsatz ausreicht, die Bremswärme ohne Überhitzung irgend welcher Teile aufzunehmen: Die axiale Breite der Ventilationsabschnitte 9 gewährleistet eine derartige Wärmeabfuhr von den Reibringabschnitten 8 zur die Kühlluftkanäle 10 durchströmenden Kühlluft, daß keine unzulässig hohen Temperaturen erreicht werden. Auch bei den erwähnten, wiederholten Stoppbremsungen reichen die drei Achsbremsscheiben je Radsatz aus, den Bremswärmeanfall ohne Überhitzung aufzunehmen und an die Kühlluft bzw. die umgebende Luft vor Beginn der jeweils nächsten Stoppbremsung im ausreichenden Maße abzugeben.

Kurzfassung:
Die insbesondere für Hochgeschwindigkeitsgüterwagen vorgesehene Achsbremsscheibe weist einen einstückigen Bremsring (6) auf, der zwei axial zueinander versetzte Reibringabschnitte (8) und diese verbindende Ventilationsabschnitte (9) besitzt. Die Ventilationsabschnitte (9) und die Reibringabschnitte (8) begrenzen Kühlluftkanäle (10), welche von radialinnen nach radialaußen von Kühlluft durchströmbar sind. Die axiale Breite des Bremsringes (6), gemessen zwischen den jeweils axial äußeren Reibringflächen (7) der Reibringabschnitte (8), beträgt zwischen 150 und 200 mm, vorzugsweise 170 mm und das Verhältnis von axialer zu radialer Breite des Bremsringes liegt zwischen etwa 1,0 bis 1,4. Durch diese Bemessung ist ein optimaler Wärmeabfluß von den Reibringabschnitten (8) durch die Ventilationsabschnitte (9) zur die Kühlluftkanäle (10) durchströmenden Kühlluft möglich. Diese Kühlung reicht aus, bei drei derartigen Achsbremsscheiben je Radsatz eines Hochgeschwindigkeitsgüterwagens lange Gefälle gebremst abzufahren, ohne eine überhitzung befürchten zu müssen.

### Bezugszeichenliste

- 1: Nabenteil
- 2: Ringflansch
- 3: Schraube
- 4: Klemmring
- 5: Ringflansch
- 6: Bremsring
- 7: Reibringfläche
- 8: Reibringabschnitt
- 9: Ventilationsabschnitt
- 10: Kühlluftkanal
- 11: Ringnut

## Patentansprüche

1. Achsbremsscheibe des Schienenfahrzeuges, insbesondere Hochgeschwindigkeitsgüterwagen, mit einem einstückigen Bremsring (6) aus einem Eisenwerkstoff, der zwei axial zueinander versetzte, außenseitig Reibringflächen (7) aufweisende Reibringabschnitte (8) aufweist, welche durch Ventilationsabschnitte (9) miteinander verbunden sind, welche bei Rotation des Bremsringes (6) Kühlluft durch zwischen diesen verlaufende und axial durch die Reibringabschnitte (8) begrenzte Kühlluftkanäle (10) von radial innen nach radial außen fördern, dadurch gekennzeichnet, daß die axiale Breite des Bremsringes (6) zwischen 140 und 200 mm beträgt.

2. Achsbremsscheibe nach Anspruch 1, dadurch gekennzeichnet, daß die axiale Breite des Bremsringes (6) im Neuzustand ca. 170 mm beträgt.

3. Achsbremsscheibe nach Anspruch 1 oder 2, dadurch gekennzeichnet, daß die axiale Breite jedes Reibringabschnittes zwischen 15 und 30 mm beträgt.

4. Achsbremsscheibe nach Anspruch 3, dadurch gekennzeichnet, daß die axiale Breite jedes Reibringabschnittes (8) im Neuzustand ca. 22 mm beträgt.

5. Achsbremsscheibe nach einem oder mehreren der vorstehenden Ansprüche, dadurch gekennzeichnet, daß die Reibringabschnitte (8) an ihrem Umfangsbereich eine das Verschleißmaß anzeigende, ggf. als schmale Ringnut (11) ausgebildete Markierung im axialen Abstand von ca. 5 bis 7 mm von der Reibringfläche (7) aufweisen.

6. Achsbremsscheibe nach einem oder mehreren der vorstehenden Ansprüche, dadurch gekennzeichnet, daß die Ventilationsabschnitte (9) als zumindest annähernd radial verlaufende, flache Ventilationsrippen oder axial verlaufende Rundstege mit zylindrischem oder ovalen Querschnitt ausgebildet sind.

7. Achsbremsscheibe nach einem oder mehreren der vorstehenden Ansprüche, gekennzeichnet durch die Anordnung von drei derartigen Achsbremsscheiben auf einer Radsatzwelle.

8. Achsbremsscheibe nach einem oder mehreren der vorstehenden Ansprüche, dadurch gekennzeichnet, daß das Verhältnis der axialen zur radialen Breite des Bremsringes (6) 1,0 bis 1,4 beträgt.

## Claims

1. Axle brake disc of a rail vehicle, in particular a high speed freight car, having a one-piece brake ring (6) of iron material which has two friction ring sections (8) having friction ring surfaces (7) on the outside which are offset axially with respect to each other, which sections are joined together by ventilation sections (9) which, during rotation of the brake ring (6), supply cool air from radially inside to radially outside through cooling air ducts (10) extending between these ventilation sections and defined axially by the friction ring sections (8), characterised in that the axial width of the brake ring (6) is between 140 and 200 mm.

2. Axle brake disc according to claim 1, characterised in that the axial width of the brake ring (6) in the new state is about 170 mm.

3. Axle brake disc according to claim 1 or 2, characterised in that the axial width of each friction ring section is between 15 and 30 mm.

4. Axle brake disc according to claim 3, characterised in that the axial width of each friction ring section (8) in the new state is about 22 mm.

5. Axle brake disc according to one or several of the preceding claims, characterised in that in their peripheral region the friction ring sections (8) have marking indicating the amount of wear, possibly designed as a narrow annular groove (11), at an axial distance of about 5 to 7 mm from the friction ring surface (7).

6. Axle brake disc according to one or several of the preceding claims, characterised in that the ventilation sections (9) are constructed as at least approximately radially extending, flat ventilation ribs or axially extending round crosspieces with a cylindrical or oval cross-section.

7. Axle brake disc according to one or several of the preceding claims, characterised by the arrangement of three axle brake discs of this type on a wheel set shaft.

8. Axle brake disc according to one or several of the preceding claims, characterised in that the ratio of the axial to the radial width of the brake ring (6) is 1.0 to 1.4.

## Revendications

1. Disque de freinage d'essieu d'un véhicule sur rail, notamment de wagons de marchandise à grande vitesse, comprenant une jante (6) de freinage d'une seule pièce en un matériau ferreux, qui comporte deux parties (8) annulaires de frottement, qui ont des surfaces (7) annulaires de frottement du côté extérieur décalées axialement l'une par rapport à l'autre, et qui sont reliées l'une à l'autre par des parties (9) de ventilation, lesquelles, lors de la rotation de la jante de freinage (6), font passer radialement de l'intérieur vers l'exterieur de l'air de refroidissement dans des canaux (10) d'air de refroidissement s'étendant entre ceux-ci et délimités axialement par les parties annulaires (8) de frottement , caractérisé en ce que la largeur axiale de la jante (6) de freinage et comprise entre 140 et 200 mm.

2. Disque de freinage d'essieu suivant la revendication 1, caractérisé en ce que la largeur axiale de la jante (6) de freinage à l'état neuf est de 170 mm environ.

3. Disque de freinage d'essieu suivant la revendication 1 ou 2, caractérisé en ce que la largeur axiale de chaque partie annulaire de frottement est comprise entre 15 et 30 mm.

4. Disque de freinage d'essieu suivant la revendication 3, caractérisé en ce que la largeur axiale de chaque partie (8) annulaire de frottement est à l'état neuf de 22 mm environ.

5. Disque de freinage d'essieu suivant l'une ou plusieurs des revendications précédentes, caractérisé en ce que les parties (8) annulaires de frottement comportent sur leur pourtour, à une distance axiale de 5 à 7 mm environ de la surface (7) annulaire de frottement, un repérage indiquant le degré d'usure et constitué, le cas échéant, sous la forme d'une gorge (11) annulaire étroite.

6. Disque de freinage d'essieu suivant l'une ou plusieurs des revendications précédentes, caractérisé en ce que les parties (9) de ventilation affectent la forme d'ailes de ventilation plate et s'étendant au moins à peu près radialement ou de nervures arrondies s'étendant axialement et ayant une section transversale cylindrique ou ovale.

7. Disque de freinage d'essieu suivant l'une ou plusieurs des revendications précédentes, caractérisé en ce qu'il est prévu trois disques de freinage d'essieu de ce genre sur un arbre de train de roue.

8. Disque de freinage d'essieu suivant l'une ou plusieurs des revendications précédentes, caractérisé en ce que le rapport de la largeur axiale à la largeur radiale de la jante (6) de freinage est compris entre 1,0 et 1,4.
